# EUROPÄISCHE PATENTANMELDUNG

(11) **EP 0 768 797 A2**
(43) Veröffentlichungstag der Anmeldung: **16.04.1997**
(21) Anmeldenummer: 96115529.8
(22) Anmeldetag: 27.09.1996
(51) Int. Cl.: H04N 7/173, H04N 7/20

(54) **Satelliten-Videokommunikationssystem**

(30) Priorität: 10.10.1995 DE 19537712
(71) Anmelder: RTL Plus Deutschland Fernsehen GmbH & Co. Betriebs-KG, 50858 Köln (DE)
(72) Erfinder: Engels, Matthias, 50674 Köln (DE); Sewczyk, Jürgen, 50259 Pulheim (DE); Asshauer, Klaus, 50259 Pulheim (DE)
(74) Vertreter: Selting, Günther, Dipl.-Ing.

(57) **Zusammenfassung**

Das Videokommunikationssystem umfaßt zahlreiche Video-Sende- und -Empfangsstationen (10), die an unterschiedlichen Orten angeordnet sind und über einen Satelliten (12) Fernsehprogrammteile austauschen sollen, wobei jeweils eine Videostation (10) mit einer oder mehreren ausgewählten anderen Videostationen (10) kommunizieren soll. Das gesamte Übertragungsmanagement erfolgt über eine Zentrale (11), die einen Zentralrechner enthält, welcher über ein terrestrisches Datennetz (13) die Videostationen (10) steuert. Dabei werden die einzelnen Übertragungswünsche nacheinander abgearbeitet. Der Zentralrechner liefert Steuerbefehle und Einschaltbefehle an die jeweils beteiligten Videostationen (10). Dadurch werden unnötige Wartezeiten bei der Fernsehübertragung über Satelliten vermieden.

## Beschreibung

Die Erfindung betrifft ein Satelliten-Videokommunikationssystem, bei dem mehrere an verteilten Orten angeordnete Sende- und Empfangsstation über einen Fernsehsatelliten miteinander kommunizieren können.

Fernsehanstalten unterhalten an verschiedenen Orten Studios, die Informationen und Programmbeiträge liefern und solche Informationen und Programmbeiträge auch aus anderen Quellen beziehen müssen. Dabei werden Videobeiträge beispielsweise von einem lokalen Studio an die Zentrale des Senders übermittelt oder von einem lokalen Studio zu einem anderen lokalen Studio. Die Studios sind mit Sende- und Empfangsstationen ausgestattet, die über einen Satelliten in Video-Kommunikation miteinander in Verbindung treten können. Größere Sendeanstalten verfügen über einen festen Satellitenkanal, damit ihre Studios untereinander Programmbestandteile austauschen können. Über diesen Satellitenkanal kann auch ein Live-Programm zusammengestellt werden, an dem mehrere Studios in unterschiedlichen Stationen beteiligt sind. Generell dient ein derartiger Videokanal dem internen Programmaustausch zwischen den Studios des Senders, und nicht dem Ausstrahlen eines Programms unmittelbar an das allgemeine Publikum. Bisher erfolgt die Ausnutzung eines derartigen senderinternen Satellitenkanals in der Weise, daß die Studios, zwischen denen ein Informationsaustausch über den Satellitenkanal erfolgen soll, sich miteinander in Verbindung setzen und eine Kommunikation über den Satellitenkanal vereinbaren. Es kommt dann aber häufig vor, daß zu der vereinbarten Zeit der Satellitenkanal anderweitig belegt ist oder aus anderen Gründen nicht zur Verfügung steht. Generell müssen diejenigen Stationen, die sich um eine Satellitenkommunikation mit einer anderen Station bemühen, in der Regel oft viele Versuche starten, bis eine solche Kommunikation endlich zustandekommt. Die für Senden und Empfang erforderlichen Einschalt- und Steuerbefehle werden zwischen den beteiligten Stationen direkt ausgetauscht.

Der Erfindung liegt die Aufgabe zugrunde, ein Satelliten-Videokommunikationssystem zu schaffen, mit dem unnötige Leitungsbelegungen sowohl des Satellitenkanals, als auch der Kommunikationsleitungen zwischen den Stationen vermieden werden, und bei dem die Übermittlung effizient und ohne unkalkulierbare Wartezeiten durchgeführt wird.

Die Lösung dieser Aufgabe erfolgt erfindungsgemäß mit den im Patentanspruch 1 angegebenen Merkmalen.

Bei dem erfindungsgemäßen Satelliten-Videokommunikationssystem sind die Stationen, die untereinander über den Satelliten in Verbindung treten können, durch ein Datennetz mit einer gemeinsamen Zentrale verbunden.

Diese Zentrale führt das gesamte Kommunikationsmanagement für alle Stationen mit einem Zentralcomputer durch. Der Zentralcomputer legt die Reihenfolge fest, in der die einzelnen Verbindungen zwischen den jeweiligen Videostationen hergestellt werden, und er erzeugt darüber hinaus die Einschalt- und Steuerbefehle für das Empfangen bzw. Senden in den jeweils beteiligten Stationen. Nach der Erfindung sind die Videostationen insofern unselbständig, als es einer Videostation nicht möglich ist, einen direkten Verbindungsaufbau zu einer anderen Station herzustellen. Sämtliche Verbindungsaufbauten erfolgen ausschließlich über die Zentrale, die damit eine gute Auslastung des Satellitenkanals gewährleisten kann. Die Zentrale bestimmt, welche Videostation mit welcher kommunizieren soll und wann dies geschieht bzw. in welcher Reihenfolge. Ferner legt sie Bedingungen fest, mit denen diese Kommunikation erfolgen soll, also beispielsweise die Art der Datenkompression oder -codierung oder den Modulationsmodus. Die Befehle des Zentralcomputers werden unmittelbar an Computer in den jeweiligen Videostationen übermittelt, wobei das Einschalten und Steuern der Sende- und Empfangseinrichtungen in den Stationen automatisch durch die Zentrale durchgeführt wird, ohne daß ein menschliches Eingreifen erforderlich wäre. Die Zentrale legt also nicht nur das Management der Übertragung fest, sondern sie steuert und überwacht auch die Durchführung des Kommunikationsvorganges oder zumindest dessen Einleitung.

Wenn zwei Videostationen miteinander in Verbindung treten wollen, muß dies der Zentrale natürlich mitgeteilt werden, damit der Kommunikationswunsch in dem Zentralcomputer vermerkt wird. Diese Mitteilungen erfolgen in der Regel durch menschliche Übertragung, beispielsweise per Telefon. Natürlich besteht auch die Möglichkeit, daß die einzelnen Stationen unmittelbar Kommunikationswünsche an den Operator des Zentralcomputers weitergeben können. Der Zentralcomputer nimmt die bei ihm eingehenden Übertragungswünsche in eine Liste auf und arbeitet diese Liste nach Prioritätskriterien ab. Es gibt daher bei der Nutzung des Videokanals keine unkalkulierbaren Wartezeiten und insbesondere keine vergeblichen Belegungsversuche.

Im folgenden wird unter Bezugnahme auf die Zeichnungen ein Ausführungsbeispiel der Erfindung näher erläutert.

Es zeigen:
- Fig. 1: eine schematische Darstellung des Satelliten-Videokommunikationssystems und
- Fig. 2: ein Blockschaltbild des Aufbaus einer der Video-Sende- und -Empfangsstationen.

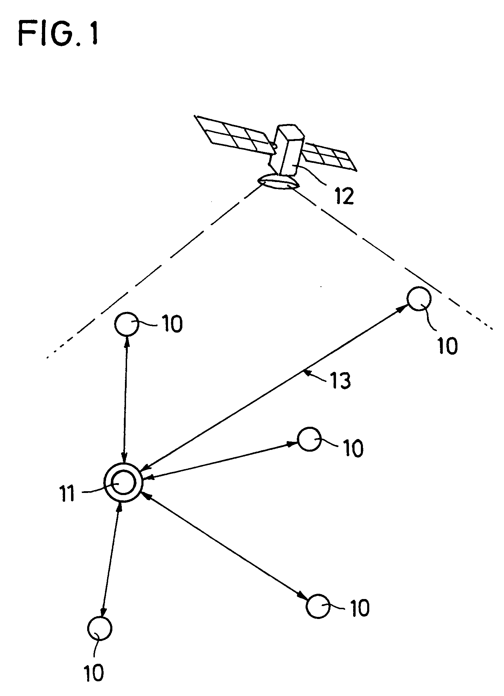

In Fig. 1 ist das interne Kommunikationsnetz einer Fernsehanstalt dargestellt. Dieses Kommunikationsnetz besteht aus zahlreichen Video-Sende- und -Empfangsstationen 10, die über einen oder mehrere Erdteile verteilt angeordnet sind, der Zentrale 11 der Sendeanstalt und einem Satelliten 12, der an einer festen Stelle über der Erde im Weltraum positioniert ist und dessen Sende- und Empfangsbereich sämtliche Videostationen 10 und die Zentrale 11 erfaßt.

Jede der Videostationen 10,11 enthält ein Fernsehstudio und eine Satelliten-Sende- und -Empfangseinrichtung, so daß sie mit dem Satelliten und über diesen mit jeder anderen Videostation und auch der Zentrale 11 kommunizieren kann, d.h. Video- und Tonübertragungen vornehmen kann.

Wenn eine der Videostationen 10 zu einer anderen Videostation oder zur Zentrale eine Sendung durchführen will, erfolgt die Steuerung und Koordination des Übertragungsvorganges über ein terrestrisches Datennetz 13, z.B. über das ISDN-Netz, durch die Zentrale 11. Sämtliche Übertragungswünsche werden der Zentrale 11 gemeldet, in der sich der Zentralcomputer befindet. Dieser arbeitet die einzelnen Übertragungswünsche, z.B. in der Reihenfolge ihres Einganges, ihrer Wichtigkeit oder nach anderen Prioritätskriterien, ab. Er erteilt der sendenden Station den Sendebefehl und der empfangenden Station den Empfangsbefehl über das terrestrische Netz 13. Diese beiden Stationen tauschen dann die Videobilder und den zugehörigen Ton sowie etwaige andere Informationen gegenseitig über den Satelliten 12 miteinander aus.

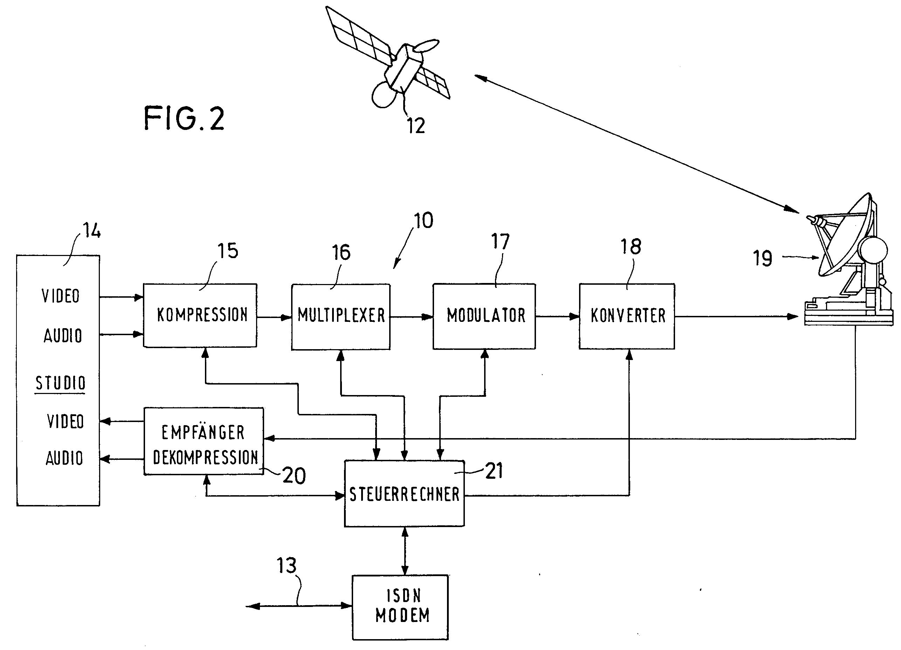

In Fig. 2 ist das Blockschaltbild einer der Videostationen 10 dargestellt. Die Station enthält ein Studio 14 mit Video-Aufzeichnungs- und Wiedergabegeräten oder auch Videokameras. Aus diesem Studio 14 werden die zu sendenden Signale in digitaler Form einer Datenkompressionsvorrichtung 15 zugeführt, in der eine Datenkompression zur Verringerung der Übertragungsbandbreite oder Übertragungszeit erfolgt. Die Datenkompressionsvorrichtung 15 ist über einen Multiplexer 16 mit einem Modulator 17 verbunden, dessen Ausgangsfrequenz von einem Frequenzkonverter 18 auf die Sendefrequenz der Satellitenantenne 19 angehoben wird. Die Antenne 19 ist auf den Satelliten 12 ausgerichtet und sendet die betreffenden Signale an den Satelliten.

Im Falle eines Signalempfangs vom Satelliten 12 empfängt die Antenne 19 die Satellitensignale und sendet diese an den Empfänger 20, in dem auch die Datendekompression erfolgt. Der Empfänger 20 liefert die Video- und Audiosignale an das Studio 14.

Sämtliche Komponenten der Videostation 11 werden von einem Steuerrechner 21 gesteuert. Der Steuerrechner 21 ist über ein ISDN-Modem mit dem Netz 13 verbunden.

Im Falle einer beabsichtigten Übertragung wird diese dem Personal der Zentrale 11 beispielsweise telefonisch angekündigt. Das Personal gibt dann in den Zentralrechner den Übertragungswunsch ein sowie auch dessen Priorität gegenüber eventuellen anderen Übertragungswünschen, die noch nicht abgearbeitet worden sind. Wenn die Übertragung zur Realisierung ansteht, gibt der Zentralrechner an die zum Senden bestimmte Station und an die zum Empfang bestimmte Station jeweils die erforderlichen Sende- bzw. Empfangsbefehle sowie auch Steuerbefehle über das Netz 13. Zu den Steuerbefehlen gehört beispielsweise ein Befehl, der den Kompressionsmodus der Kompressionsvorrichtung 15 bestimmt. Die Datenkompression kann nach unterschiedlichen Modi durchgeführt werden. Eine starke Datenkompression erfordert eine höhere Rechenzeit, wodurch Laufzeitverzögerungen von etwa 1 sec. auftreten können. Bei einer Live-Übertragung, bei der der Korrespondent sich im Studio der externen Station befindet, während der Interviewer in der Zentrale sitzt, kann die Laufzeitverzögerung sich störend auswirken, weil der Zuschauer des Programms sie bemerkt. Aus diesem Grunde wird bei derartigen Live-Übertragungen die Kompression auf einen geringeren Grad eingestellt, mit der Folge, daß sich die Bildqualität geringfügig verschlechtert. Bei anderen Übertragungen, bei denen die Laufzeit keine Rolle spielt, wird dagegen ein stärkerer Kompressionsgrad eingestellt. Der einzustellende Kompressionsgrad wird von dem Zentralrechner sowohl an die empfangende als auch an die sendende Station mitgeteilt, damit die Kompressionsvorrichtung 15 und der Empfänger 20 entsprechend eingestellt werden. Nachdem die Zentrale die Steuerdaten übertragen hat und diese von den beteiligten Stationen quittiert worden sind, gibt die Zentrale den Einschaltbefehl an die beteiligten Stationen, woraufhin die Übertragung über den Satelliten 12 beginnt. Nach Beendigung dieser Übertragung kann die Zentrale den nächsten Übertragungsvorgang einleiten.

Bei dem beschriebenen Videokommunikationssystem sind menschliche Eingriffe nicht erforderlich. Die Zentrale steuert das gesamte Übertragungsmanagement aufgrund der ihr eingegebenen Programmwünsche selbständig. An den Videostationen 10 ist für die Übertragungsvorgänge kein Personal erforderlich.

## Patentansprüche

1. Satelliten-Videokommunikationssystem mit mehreren an verteilten Orten angeordneten Video-Sende- und -Empfangsstationen (10), und einem Fernsehsatelliten (12), über den auf einem einzigem Videokanal ausgewählte Video-Sende- und -Empfangsstationen miteinander kommunizieren können,
**dadurch gekennzeichnet,**
daß alle Video-Sende- und -Empfangsstationen (10) über ein Datennetz (13) mit einer gemeinsamen Zentrale (11) verbunden sind, welche mit einem Zentralcomputer diejenigen Stationen (10) bestimmt, die zu einer bestimmten Zeit Videoprogramme miteinander austauschen sollen, und diesen Stationen die für das abgestimmte Senden und Empfangen der Videoprogramme erforderlichen Steuer- und Einschaltbefehle übermittelt.

2. Satelliten-Videokommunikationssystem nach Anspruch 1, dadurch gekennzeichnet, daß der Zentralcomputer in dem Datennetz (13) die Verbindung zu den beiden an einer Übertragung zu beteiligenden Videostationen (10) herstellt, an jede dieser Videostationen Steuer- und Einschaltbefehle ausgibt und entsprechende Bestätigungssignale der Stationen empfängt.

3. Satelliten-Videokommunikationssystem nach Anspruch 1 oder 2, dadurch gekennzeichnet, daß jede Videostation (10) einen Steuerrechner (21) enthält, der aus dem Datennetz (13) Befehle von dem Zentralcomputer empfängt und Geräte (15-18;20) einer Übertragungskette steuert, wobei diese Geräte u.a. einen Kompressionscodierer (15) umfassen.
